(19)

**Europäisches Patentamt**
**European Patent Office**
**Office européen des brevets**

(11) **EP 2 680 222 A1**

(12) **EUROPEAN PATENT APPLICATION**

(43) Date of publication:
**01.01.2014 Bulletin 2014/01**

(51) Int Cl.:
*G06T 3/40* (2006.01)  *G06T 7/00* (2006.01)

(21) Application number: **13173908.8**

(22) Date of filing: **27.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.06.2012 IN CH25752012**

(71) Applicant: **Nokia Corporation**
**02150 Espoo (FI)**

(72) Inventors:
• **Ukil, Soumik**
**560034 Bangalore (IN)**
• **Govindarao, Krishna Annasagar**
**560050 Bangalore (IN)**

(74) Representative: **Nokia Corporation**
**Intellectual Property Department**
**Keilalahdentie 4**
**02150 Espoo (FI)**

(54) **Method, apparatus and computer program product for processing media content**

(57) In accordance with an example embodiment a method, apparatus and computer program product are provided. The method comprises determining a set of first-side edge portions and a set of second-side edge portions associated with a plurality of images. A first plurality of edge pairs is determined between the set of first-side edge portions and the set of second-side edge portions. A first set of weights are assigned to the first plurality of edge pairs based at least on a pair-wise matching between the set of first-side edge portions and the set of second-side edge portions. The plurality of images are arranged in a first sequence based on the first set of weights.

Determine a set of first-side edge portions and a set of second-side edge portions associated with a plurality of images — 702

Determine a first plurality of edge pairs between the set of first-side edge portions and the set of second-side edge portions, wherein an edge pair of the first plurality of edge pairs comprises a first-side edge portion and a second-side edge portion — 704

Assign a first set of weights to the first plurality of edge pairs based at least on a pair-wise matching between the set of first-side edge portions and the set of second-side edge portions — 706

Arrange the plurality of images in a first sequence based on the first set of weights assigned to the first plurality of edge pairs — 708

700

**FIGURE 7**

EP 2 680 222 A1

**Description**

## TECHNICAL FIELD

Various implementations relate generally to method, apparatus, and computer program product for arranging images in a sequence.

## BACKGROUND

The rapid advancement in technology related to capture and display of multimedia content has resulted in an exponential growth in tools related to media content creation. Devices like mobile phones and personal digital assistants (PDA) are now being increasingly configured with media capture tools, such as a camera, thereby facilitating easy capture of media content. Such devices are increasingly utilized in various image capture applications, such as generation of panorama image. A panorama image refers to an image captured with an extended field of view in one or more directions (for example, horizontally or vertically). The extended field of view is a wide-angle representation beyond that captured by an image sensor. A panorama image includes a plurality of images that may be captured and arranged sequentially.

## SUMMARY OF SOME EMBODIMENTS

Various aspects of example embodiments are set out in the claims.

In a first aspect, there is provided a method comprising: determining a set of first-side edge portions and a set of second-side edge portions associated with a plurality of images; determining a first plurality of edge pairs between the set of first-side edge portions and the set of second-side edge portions, an edge pair of the first plurality of edge pair comprising a first-side edge portion of an image and a second-side edge portion of an another image of the plurality of images; assigning a first set of weights to the first plurality of edge pairs based at least on a pair-wise matching between the set of first-side edge portions and the set of second-side edge portions; and arranging the plurality of images in a first sequence based on the first set of weights assigned to the first plurality of edge pairs.

In a second aspect, there is provided an apparatus comprising at least one processor; and at least one memory comprising computer program code, the at least one memory and the computer program code configured to, with the at least one processor, cause the apparatus to at least perform: determine a set of first-side edge portions and a set of second-side edge portions associated with a plurality of images; determine a first plurality of edge pairs between the set of first-side edge portions and the set of second-side edge portions, an edge pair of the first plurality of edge pair comprising a first-side edge portion of an image and a second-side edge portion of an another image of the first plurality of images; assign a first set of weights to the first plurality edge pairs based at least on a pair-wise matching between the set of first-side edge portions and the set of second-side edge portions; and arrange the plurality of images in a first sequence based on the first set of weights assigned to the first plurality of edge pairs.

In a third aspect, there is provided a computer program product comprising at least one computer-readable storage medium, the computer-readable storage medium comprising a set of instructions, which, when executed by one or more processors, cause an apparatus to at least perform: determine a set of first-side edge portions and a set of second-side edge portions associated with a plurality of images; determine a first plurality of edge pairs between the set of first-side edge portions and the set of second-side edge portions, an edge pair of the first plurality of edge pair comprising a first-side edge portion of an image and a second-side edge portion of an another image of the plurality of images; assign a first set of weights to the first plurality edge pairs based at least on a pair-wise matching between the set of first-side edge portions and the set of second-side edge portions; and arrange the plurality of images in a first sequence based on the first set of weights assigned to the first plurality of edge pairs.

In a fourth aspect, there is provided an apparatus comprising: means for determining a set of first-side edge portions and a set of second-side edge portions associated with a plurality of images; means for determining a first plurality of edge pairs between the set of first-side edge portions and the set of second-side edge portions, an edge pair of the first plurality of edge pairs comprising a first-side edge portion of an image and a second-side edge portion of an another image of the plurality of images; assign a first set of weights to the first plurality edge pairs based at least on a pair-wise matching between the set of first-side edge portions and the set of second-side edge portions; and means for arranging the plurality of images in a first sequence based on the first set of weights assigned to the first plurality of edge pairs.

In a fifth aspect, there is provided a computer program comprising program instructions which when executed by an apparatus, cause the apparatus to: determine a set of first-side edge portions and a set of second-side edge portions associated with a plurality of images; determine a first plurality of edge pairs between the set of first-side edge portions and the set of second-side edge portions, an edge pair of the first plurality of edge pair comprising a first-side edge portion of an image and a second-side edge portion of an another image of the plurality of images; assign a first set of weights to the first plurality edge pairs based at least on a pair-wise matching between the set of first-side edge portions and the set of second-side edge portions; and arrange the plurality of images in a first sequence based on the first set of weights assigned to the first plurality of edge pairs.

## BRIEF DESCRIPTION OF THE FIGURES

Various embodiments are illustrated by way of example, and not by way of limitation, in the figures of the accompanying drawings in which:

FIGURE 1 illustrates a device in accordance with an example embodiment;
FIGURE 2 illustrates an apparatus for arranging images in a sequence in accordance with an example embodiment;
FIGURE 3 illustrates vector projections of images for arranging the images in a sequence, in accordance with an embodiment;
FIGURES 4A and 4B illustrate bipartite graphs matching for aligning edges of plurality of images for arranging images in a sequence, in accordance with an embodiment;
FIGURES 5A and 5B illustrate a plurality of images that may be arranged in a sequence for generating a non-360 degree panorama image, in accordance with an embodiment;
FIGURES 6A and 6B illustrate a plurality of images that may be arranged in a sequence for generating a 360 degree panorama image, in accordance with an embodiment;
FIGURE 7 illustrates a flowchart depicting an example method for arranging images in a sequence in accordance with an example embodiment; and
FIGURES 8A and 8B illustrates a flowchart depicting an example method for arranging images in a sequence in accordance with another example embodiment.

## DETAILED DESCRIPTION

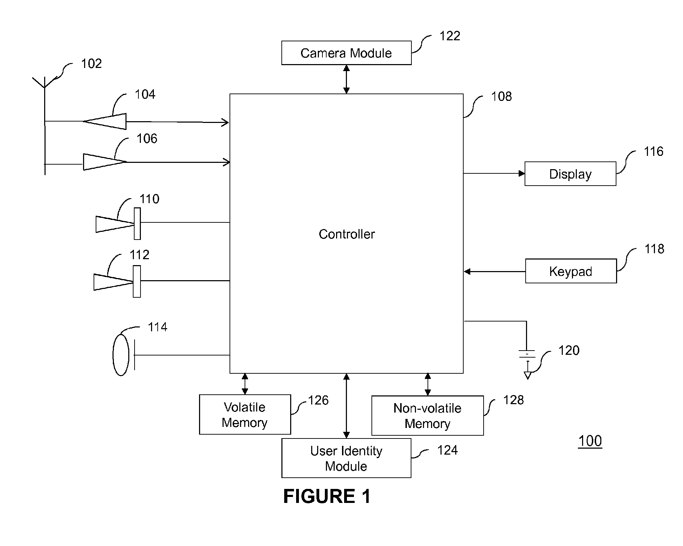

Example embodiments and their potential effects are understood by referring to FIGURES 1 through 8B of the drawings.

FIGURE 1 illustrates a device 100 in accordance with an example embodiment. It should be understood, however, that the device 100 as illustrated and hereinafter described is merely illustrative of one type of device that may benefit from various embodiments, therefore, should not be taken to limit the scope of the embodiments. As such, it should be appreciated that at least some of the components described below in connection with the device 100 may be optional and thus in an example embodiment may include more, less or different components than those described in connection with the example embodiment of FIGURE 1. The device 100 could be any of a number of types of mobile electronic devices, for example, portable digital assistants (PDAs), pagers, mobile televisions, gaming devices, cellular phones, all types of computers (for example, laptops, mobile computers or desktops), cameras, audio/video players, radios, global positioning system (GPS) devices, media players, mobile digital assistants, or any combination of the aforementioned, and other types of communications devices.

The device 100 may include an antenna 102 (or multiple antennas) in operable communication with a transmitter 104 and a receiver 106. The device 100 may further include an apparatus, such as a controller 108 or other processing device that provides signals to and receives signals from the transmitter 104 and receiver 106, respectively. The signals may include signaling information in accordance with the air interface standard of the applicable cellular system, and/or may also include data corresponding to user speech, received data and/or user generated data. In this regard, the device 100 may be capable of operating with one or more air interface standards, communication protocols, modulation types, and access types. By way of illustration, the device 100 may be capable of operating in accordance with any of a number of first, second, third and/or fourth-generation communication protocols or the like. For example, the device 100 may be capable of operating in accordance with second-generation (2G) wireless communication protocols IS-136 (time division multiple access (TDMA)), GSM (global system for mobile communication), and IS-95 (code division multiple access (CDMA)), or with third-generation (3G) wireless communication protocols, such as Universal Mobile Telecommunications System (UMTS), CDMA1000, wideband CDMA (WCDMA) and time division-synchronous CDMA (TD-SCDMA), with 3.9G wireless communication protocol such as evolved- universal terrestrial radio access network (E-UTRAN), with fourth-generation (4G) wireless communication protocols, or the like. As an alternative (or additionally), the device 100 may be capable of operating in accordance with non-cellular communication mechanisms. For example, computer networks such as the Internet, local area network, wide area networks, and the like; short range wireless communication networks such as Bluetooth® networks, Zigbee® networks, Institute of Electric and Electronic Engineers (IEEE) 802.11x networks, and the like; wireline telecommunication networks such as public switched telephone network (PSTN).

The controller 108 may include circuitry implementing, among others, audio and logic functions of the device 100. For example, the controller 108 may include, but are not limited to, one or more digital signal processor devices, one or more microprocessor devices, one or more processor(s) with accompanying digital signal processor(s), one or more processor(s) without accompanying digital signal processor(s), one or more special-purpose computer chips, one or more field-programmable gate arrays (FPGAs), one or more controllers, one or more application-specific integrated circuits (ASICs), one or more computer(s), various analog to digital converters, digital to analog converters, and/or other support circuits. Control and signal processing functions of the device 100 are allocated between these devices according to their respective capabilities. The controller 108 thus may also include the functionality to convolutionally encode and interleave message and data prior to modulation and transmission. The controller 108 may additionally include an internal voice coder, and may include an internal data modem. Further, the controller 108 may include functionality to operate one or more software programs, which may be stored in a memory. For example, the controller 108 may be capable of operating a connectivity program, such as a conventional Web browser. The connectivity program may then allow the device 100 to transmit and receive Web content, such as location-based content and/or other web page content, according to a Wireless Application Protocol (WAP), Hypertext Transfer Protocol (HTTP) and/or the like. In an example embodiment, the controller 108 may be embodied as a multi-core processor such as a dual or quad core processor. However, any number of processors may be included in the controller 108.

The device 100 may also comprise a user interface including an output device such as a ringer 110, an earphone or speaker 112, a microphone 114, a display 116, and a user input interface, which may be coupled to the controller 108. The user input interface, which allows the device 100 to receive data, may include any of a number of devices allowing the device 100 to receive data, such as a keypad 118, a touch display, a microphone or other input device. In embodiments including the keypad 118, the keypad 118 may include numeric (0-9) and related keys (#, *), and other hard and soft keys used for operating the device 100. Alternatively or additionally, the keypad 118 may include a conventional QWERTY keypad arrangement. The keypad 118 may also include various soft keys with associated functions. In addition, or alternatively, the device 100 may include an interface device such as a joystick or other user input interface. The device 100 further includes a battery 120, such as a vibrating battery pack, for powering various circuits that are used to operate the device 100, as well as optionally providing mechanical vibration as a detectable output.

In an example embodiment, the device 100 includes a media capturing element, such as a camera, video and/or audio module, in communication with the controller 108. The media capturing element may be any means for capturing an image, video and/or audio for storage, display or transmission. In an example embodiment, the media capturing element is a camera module 122 which may include a digital camera capable of forming a digital image file from a captured image. As such, the camera module 122 includes all hardware, such as a lens or other optical component (s), and software for creating a digital image file from a captured image. Alternatively, the camera module 122 may include the hardware needed to view an image, while a memory device of the device 100 stores instructions for execution by the controller 108 in the form of software to create a digital image file from a captured image. In an example embodiment, the camera module 122 may further include a processing element such as a co-processor, which assists the controller 108 in processing image data and an encoder and/or decoder for compressing and/or decompressing image data. The encoder and/or decoder may encode and/or decode according to a JPEG standard format or another like format. For video, the encoder and/or decoder may employ any of a plurality of standard formats such as, for example, standards associated with H.261, H.262/ MPEG-2, H.263, H.264, H.264/MPEG-4, MPEG-4, and the like. In some cases, the camera module 122 may provide live image data to the display 116. In an example embodiment, the display 116 may be located on one side of the device 100 and the camera module 122 may include a lens positioned on the opposite side of the device 100 with respect to the display 116 to enable the camera module 122 to capture images on one side of the device 100 and present a view of such images to the user positioned on the other side of the device 100.

The device 100 may further include a user identity module (UIM) 124. The UIM 124 may be a memory device having a processor built in. The UIM 124 may include, for example, a subscriber identity module (SIM), a universal integrated circuit card (UICC), a universal subscriber identity module (USIM), a removable user identity module (R-UIM), or any other smart card. The UIM 124 typically stores information elements related to a mobile subscriber. In addition to the UIM 124, the device 100 may be equipped with memory. For example, the device 100 may include volatile memory 126, such as volatile random access memory (RAM) including a cache area for the temporary storage of data. The device 100 may also include other non-volatile memory 128, which may be embedded and/or may be removable. The non-volatile memory 128 may additionally or alternatively comprise an electrically erasable programmable read only memory (EEPROM), flash memory, hard drive, or the like. The memories may store any number of pieces of information, and data, used by the device 100 to implement the functions of the device 100.

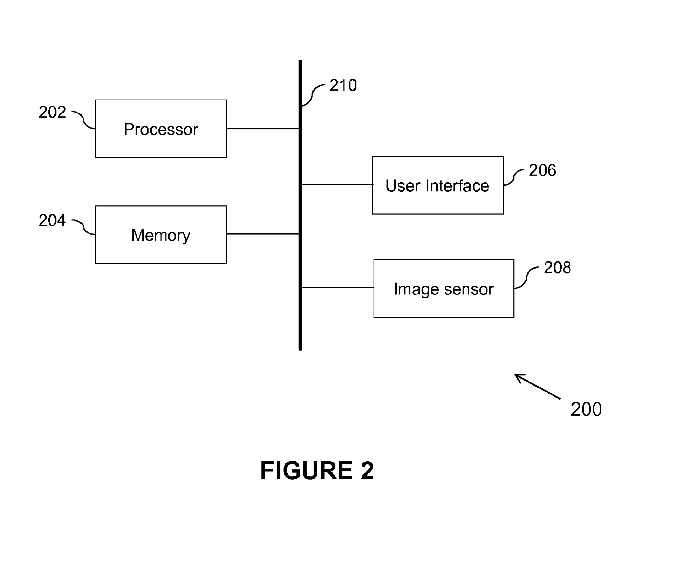

FIGURE 2 illustrates an apparatus 200 for arranging images in a sequence in accordance with an example embodiment. The apparatus 200 for arranging images may be employed, for example, in the device 100 of FIGURE 1. However, it should be noted that the apparatus 200, may also be employed on a variety of other devices both mobile and fixed, and therefore, embodiments should not be limited to application on devices such as the device 100 of FIGURE 1. Alternatively, embodiments may be employed on a combination of devices including, for example, those listed above. Accordingly, various embodiments may be embodied wholly at a single device, (for example, the device 100 or in a combination of devices). Furthermore, it should be noted that the devices or elements described below may not be mandatory and thus some may be omitted in certain embodiments.

The apparatus 200 includes or otherwise is in communication with at least one processor 202 and at least one memory 204. Examples of the at least one memory 204 include, but are not limited to, volatile and/or non-volatile memories. Some examples of the volatile memory include, but are not limited to, random access memory, dynamic random access memory, static random access memory, and the like. Some example of the non-volatile memory includes, but are not limited to, hard disks, magnetic tapes, optical disks, programmable read only memory, erasable programmable read only memory, electrically erasable programmable read only memory, flash memory, and the like. The memory 204 may be configured to store information, data, applications, instructions or the like for enabling the apparatus 200 to carry out various functions in accordance with various example embodiments. For example, the memory 204 may be configured to buffer input data comprising multimedia content for processing by the processor 202. Additionally or alternatively, the memory 204 may be configured to store instructions for execution by the processor 202.

An example of the processor 202 may include the controller 108. The processor 202 may be embodied in a number of different ways. The processor 202 may be embodied as a multi-core processor, a single core processor; or combination of multi-core processors and single core processors. For example, the processor 202 may be embodied as one or more of various processing means such as a coprocessor, a microprocessor, a controller, a digital signal processor (DSP), processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an example embodiment, the multi-core processor may be configured to execute instructions stored in the memory 204 or otherwise accessible to the processor 202. Alternatively or additionally, the processor 202 may be configured to execute hard coded functionality. As such, whether configured by hardware or software methods, or by a combination thereof, the processor 202 may represent an entity, for example, physically embodied in circuitry, capable of performing operations according to various embodiments while configured accordingly. For example, if the processor 202 is embodied as two or more of an ASIC, FPGA or the like, the processor 202 may be specifically configured hardware for conducting the operations described herein. Alternatively, as another example, if the processor 202 is embodied as an executor of software instructions, the instructions may specifically configure the processor 202 to perform the algorithms and/or operations described herein when the instructions are executed. However, in some cases, the processor 202 may be a processor of a specific device, for example, a mobile terminal or network device adapted for employing embodiments by further configuration of the processor 202 by instructions for performing the algorithms and/or operations described herein. The processor 202 may include, among other things, a clock, an arithmetic logic unit (ALU) and logic gates configured to support operation of the processor 202.

A user interface 206 may be in communication with the processor 202. Examples of the user interface 206 include, but are not limited to, input interface and/or output user interface. The input interface is configured to receive an indication of a user input. The output user interface provides an audible, visual, mechanical or other output and/or feedback to the user. Examples of the input interface may include, but are not limited to, a keyboard, a mouse, a joystick, a keypad, a touch screen, soft keys, and the like. Examples of the output interface may include, but are not limited to, a display such as light emitting diode display, thin-film transistor (TFT) display, liquid crystal displays, active-matrix organic light-emitting diode (AMOLED) display, a microphone, a speaker, ringers, vibrators, and the like. In an example embodiment, the user interface 206 may include, among other devices or elements, any or all of a speaker, a microphone, a display, and a keyboard, touch screen, or the like. In this regard, for example, the processor 202 may comprise user interface circuitry configured to control at least some functions of one or more elements of the user interface 206, such as, for example, a speaker, ringer, microphone, display, and/or the like. The processor 202 and/or user interface circuitry comprising the processor 202 may be configured to control one or more functions of one or more elements of the user interface 206 through computer program instructions, for example, software and/or firmware, stored on a memory, for example, the at least one memory 204, and/or the like, accessible to the processor 202.

In an example embodiment, the apparatus 200 may include an electronic device. Some examples of the electronic device include communication device, media capturing device with communication capabilities, computing devices, and the like. Some examples of the communication device may include a mobile phone, a personal digital assistant (PDA), and the like. Some examples of computing device may include a laptop, a personal computer, and the like. In an example embodiment, the communication device may include a user interface, for example, the UI 206, having user interface circuitry and user interface software configured to facilitate a user to control at least one function of the communication device through use of a display and further configured to respond to user inputs. In an example embodiment, the communication device may include a display circuitry configured to display at least a portion of the user interface of the communication device. The display and display circuitry may be configured to facilitate the user to control at least one function of the communication device.

In an example embodiment, the communication device may be embodied as to include a transceiver. The transceiver may be any device operating or circuitry operating in accordance with software or otherwise embodied in hardware or a combination of hardware and software. For example, the processor 202 operating under software control, or the processor 202 embodied as an ASIC or FPGA specifically configured to perform the operations described herein, or a combination thereof, thereby configures the apparatus or circuitry to perform the functions of the transceiver. The transceiver may be configured to receive multimedia content. Examples of multimedia content may include audio content, video content, data, and a combination thereof.

In an example embodiment, the communication device may be embodied as to include an image sensor, such as an image sensor 208. The image sensor 208 may be in communication with the processor 202 and/or other components of the apparatus 200. The image sensor 208 may be in communication with other imaging circuitries and/or software, and is configured to capture digital images or to make a video or other graphic media files. The image sensor 208 and other circuitries, in combination, may be an example of the camera module 122 of the device 100.

The components 202-208 may communicate with each other via a centralized circuit system 210 to perform ordering images in a sequence. The centralized circuit system 210 may be various devices configured to, among other things, provide or enable communication between the components 202-208 of the apparatus 200. In certain embodiments, the centralized circuit system 210 may be a central printed circuit board (PCB) such as a motherboard, main board, system board, or logic board. The centralized circuit system 210 may also, or alternatively, include other printed circuit assemblies (PCAs) or communication channel media.

In an example embodiment, the processor 202 is caused to, with the content of the memory 204, and optionally with other components described herein, to cause the apparatus 200 to arrange images in a sequence from the plurality of images. In an example embodiment, the images may include a plurality of successively captured images. In an example embodiment, the image sensor 208 may be configured to capture the video or the plurality of images. In an embodiment, the plurality of successively captured images may not be arranged and/or stored in an order of capture of images. In an embodiment, the plurality of images may be pre-recorded and stored in the apparatus 200. For example, the plurality of images may be stored randomly. As another example, the plurality of images may be stored in an order of an image feature, such as brightness, color, and the like. It will be noted that arranging the plurality of images in an order, as used herein, may refer to the arrangement of the plurality of images in an order of capture of the plurality of images. In an embodiment, the plurality of images may be captured by utilizing the camera module 122 of the device 100, and stored in the memory of the device 100. In yet another embodiment, the device 100 may receive the plurality of images from internal memory such as hard drive, random access memory (RAM) of the apparatus 200, or from external storage medium such as DVD, Compact Disk (CD), flash drive, memory card, or from external storage locations through Internet, Bluetooth®, and the like. The apparatus 200 may also receive the multimedia content from the memory 204. In an example embodiment, a processing means may be configured to arrange images in a sequence from the plurality of images. An example of the processing means may include the processor 202, which may be an example of the controller 108.

In an example embodiment, the processor 202 is caused to, with the content of the memory 204, and optionally with other components described herein, to cause the apparatus 200 to determine a set of first-side edge portions and a set of second-side edge portions associated with the plurality of images. In an embodiment, a first-side edge portion of the set of the first-side edge portions is opposite to a second-side edge portion of the set of second-side edge portions. For example, the first-side edge portion and the second-side edge portion may comprise a left-side edge portion and a right-side edge portion, respectively associated with an image. In another embodiment, the first-side edge portion and the second side edge portion may comprise a top-side edge portion and a bottom-side edge portion, respectively of the image.

In an embodiment, the plurality of images may be captured by rotating/moving an image capturing device in a direction, for example, in a horizontal direction or in a vertical direction. When the image capturing device is rotated in a horizontal direction from left to right or from right to left, then the image capturing device may capture a plurality of images such that images may comprise at least a portion overlapping with an adjacent image. For example, a first image, a second image and a third image may be captured by moving the image capturing device in a horizontal direction, such that at least a right-side edge portion of the first image may overlap with a left-side edge portion of the second image, and a right-side edge portion of the second image may overlap with a left-side edge portion of the third image. In an example embodiment, a processing means may be configured to determine the set of first-side edge portions and the set of second-side edge portions associated with the plurality of images. An example of the processing means may include the processor 202, which may be an example of the controller 108.

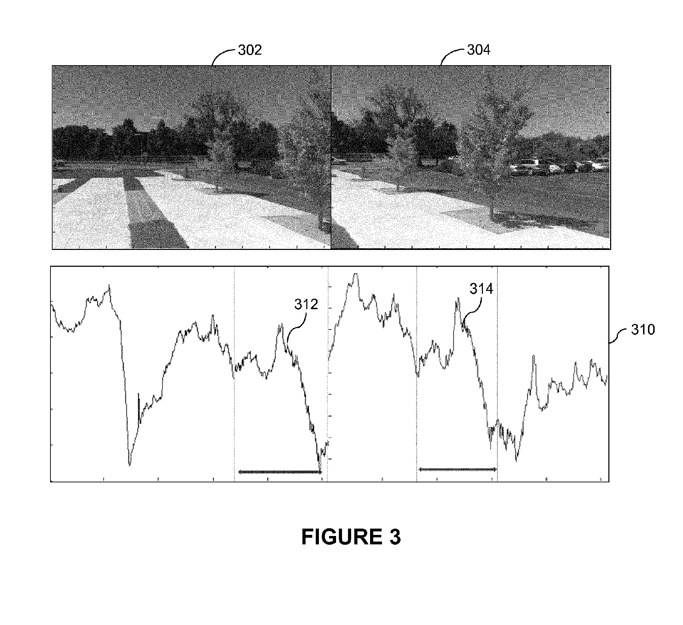

In an embodiment, the processor 202 is caused to, with the content of the memory 204, and optionally with other components described herein, to cause the apparatus 200 to determine vector projections associated with the set of the first-side edge portions and the set of the second-side edge portions. In an embodiment, the vector projections are configured to facilitate determination of a pair-wise matching between the set of first-side edge portions and the set of second-side edge portions. An example illustrating vector projections for images is explained in detail with reference to FIGURE 3. In an example embodiment, a processing means may be configured to determine vector projections associated with the set of the first-side edge portions and the set of the second-side edge portions. An example of the processing means may include the processor 202, which may be an example of the controller 108.

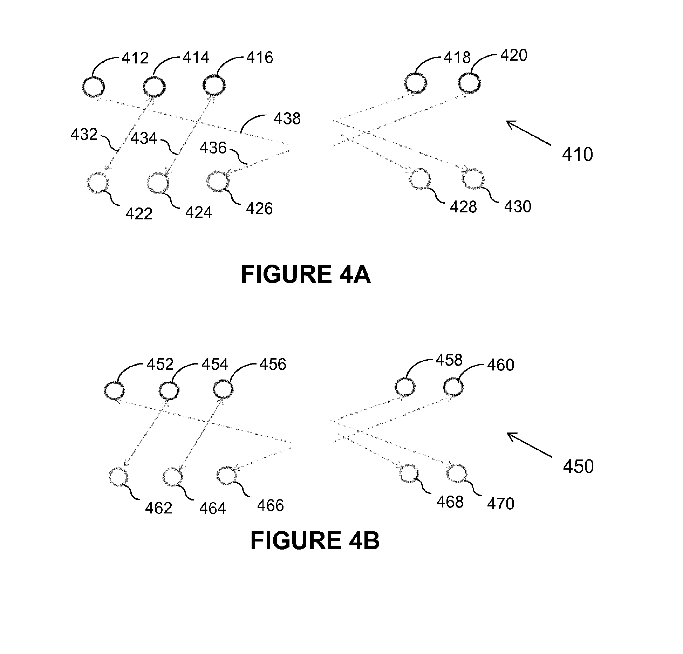

In an embodiment, the processor 202 is caused to, with the content of the memory 204, and optionally with other components described herein, to cause the apparatus 200 to match the vector projections associated with the set of the first-side edge portions and the set of the second-side edge portions. In an embodiment, the matching of the vector projections is performed to determine a first plurality of edge pairs between the set of first-side edge portions and the set of second-side edge portions. In an embodiment, an edge pair of the first plurality of edge pair comprises a first-side edge portion of an image and a second-side edge portion of an another image. For example, an edge pair may include a right-side edge portion of the first image and the left-side edge portion of the second image. Similarly, another edge pair may comprise a right-side edge portion of the first image and the left-side edge portion of the third image. The first plurality of edge pairs associated with the plurality of image is explained in detail with reference to FIGURE 4.

In an embodiment, the matching of the vector projections may be performed based on a normalized cross correlation of the first plurality of edge pair. As used herein, the normalized cross correlation (NCC) is utilized as a similarity measure in determining a matching or overlapping between various images associated with a sequence. The NCC determines a pair of pixels in the left-side edge portions of an image and the right-side edge portions of another image such that a correlation coefficient is maximized. The difference between the pixels of the image coordinates of these two pixels gives the disparity for the pixel pair. The NCC gives an approximate matching between the first plurality of edge pairs.

Once the approximate matching between the edge pairs is determined, edge orientation between each edge pair of the first plurality of edge pairs may be determined. In an embodiment, the edge orientation between the edge pairs may be determined based on a distribution of intensity gradients or edge directions in the associated images. For example, local object appearance and shape within an image may be described by utilizing the distribution of intensity gradients or edge directions. In an embodiment, the image is partitioned in various blocks and for each block a histogram of gradient directions or edge orientations for the pixels within the block may be compiled. The combination of the histograms represents a descriptor or a weight associated with the pair-wise matching.

In an embodiment, edge orientation histograms (EOG) may be computed for the edge pairs associated with the plurality of images. In an embodiment, a distance between the EOG histograms may be determined based on Bhattacharya distance. As used herein 'Bhattacharya distance' may be utilized to compute an amount of matching between the edge portions associated with the images of the plurality of images. In an embodiment, for every edge pair, Bhattacharya distance is indicative of the distance between the edges of an image and another image associated with the plurality of images. In an example embodiment, a distance from a right-side edge portion of a first image to a left-side edge portion of a second image may be represented as D($i\_right, i\_left$). Similarly, a distance from left-side edge portion of a second image to the right-side edge portion of the first image may be represented as D($i\_left, i\_right$). As is understood, the distances D($i\_right, i\_left$) and D($i\_left, i\_right$) are equal, and may be represented as:

$$\mathrm{D}(i\_right, i\_left) = \mathrm{D}(i\_left, i\_right) = \mathrm{a}$$

where, $i$ represents an image. In an embodiment, 'a' represents an image matching metric that may be utilized for matching the first side edge portion of the first image with the second side edge portion of the second image. In an example embodiment, examples of the metric 'a' may include, a Bhattacharya distance, cost of dynamic time warping (with integral projections as features), a cosine distance (with LBP histograms), or any other distance measure between two histograms or distributions.

In an embodiment, for N images, a NXN matrix may be computed such that the elements of the matrix comprise the distance of edges associated with edge pairs. It will be understood that the edge pairs comprising the first-edge portion and the second-edge portion from the same image may not be considered. In an example embodiment, a processing means may be configured to match the vector projections associated with the set of the first-side edge portions and the set of the second-side edge portions. An example of the processing means may include the processor 202, which may be an example of the controller 108.

In an example embodiment, the processor 202 is caused to, with the content of the memory 204, and optionally with other components described herein, to cause the apparatus 200 to represent the first plurality of edge pairs by means of a bipartite graph for determining the first plurality of edge pairs. In an embodiment, the bipartite graph comprises a plurality of nodes and a plurality of edges such that the plurality of edges connects every node to every other node. In particular, the plurality of nodes comprises a first set of nodes representing the set of first-side edge portions and second set of nodes representing the set of second-side edge portions of the plurality of images. In an example embodiment, a processing means may be configured to represent the first plurality of edge pairs by means of a bipartite graph for determining the first plurality of edge pairs. An example of the processing means may include the processor 202, which may be an example of the controller 108.

In an example embodiment, the processor 202 is caused to, with the content of the memory 204, and optionally with other components described herein, to cause the apparatus 200 to assign a first set of weights to the first plurality of edge pairs based at least on the pair-wise matching between the set of first-side edge portions and the set of second-side edge portions. In an embodiment, the first set of weights assigned to the first plurality edge pairs may be represented in form of a NXN matrix. In an embodiment, the processor 202 is caused to, with the content of the memory 204, and optionally with other components described herein, to cause the apparatus 200 to generate a matrix of the first set of weights, such that the dimensions of the matrix are associated with a number of first-side edge portions and a number of second-side edge portions of the plurality of images. In an example embodiment, a processing means may be configured to assign first set of weights to the first plurality of edge pairs based at least on the pair-wise matching between the set of first-side edge portions and the set of second-side edge portions. An example of the processing means may include the processor 202, which may be an example of the controller 108.

In an example embodiment, the processor 202 is caused to, with the content of the memory 204, and optionally with other components described herein, to cause the apparatus 200 to arrange the plurality of images in a first sequence based on the first set of weights assigned to the first plurality of edge pairs. In an embodiment, the plurality of images are arranged in the first sequence by selecting, for at least one of the each row and each column of the matrix, an edge pair between the set of first-side edge portions and the set of second-side edge portions that is associated with a minimum weight. In an embodiment, the minimum weight is associated with the maximum pair-wise matching.

In an embodiment, the first sequence of the plurality of image may be utilized for generating a panorama image. For example, once the plurality of images are arranged in the first sequence, a panorama image may be generated, for instance by stitching the plurality of images arranged in the first sequence. In an embodiment, the panorama image is a 360 degree panorama. As disclosed herein, the 360 degree panorama image may refer to a panorama image being generated by rotating and capturing a wide range image around a scene wherein the first end of the image is logically connected to the second end of the images. Accordingly the first-side edge portion of the first peripheral image is connected to the second-side edge portion of the second peripheral image.

In an embodiment, the panorama image is a non-360 degree image. For example, the panorama image may be a 180 degree panorama image, wherein the first sequence comprises plurality of images arranged in a manner that the first side edge portion of the first peripheral image and the second-side edge portion of the second peripheral image of the sequence of images have substantially nothing in common. In an example embodiment, when the plurality of images are determined to be associated with the non-360 degrees panorama, the processor 202 is caused to, with the content of the memory 204, and optionally with other components described herein, to cause the apparatus 200 to determine the at least one of first-side edge portion of the first peripheral image and the second-side edge portion of the second peripheral image by assuming a dummy first-side edge portion and a dummy second-side edge portion. In an embodiment, the dummy first-side edge portion and the dummy-second side edge portion may be associated with a relatively high weight because of existence of high non-overlapping between the dummy-first side edge portion and the second-side edge portions, and between the dummy-second side edge portion and the first-side edge portions. In an example embodiment, the weights may be assigned to the dummy first-side edge portion and the dummy second-side edge portion based on the following equations:

$$\text{Min\_i\_first} = \min\,(D(i\_first, j\_second)), \ j = 1\ldots.N$$

$$\text{Min\_i\_second} = \min\,(D(i\_second, j\_first)), \ j = 1\ldots.N$$

$$\text{Max\_first} = \max\,(\text{Min\_i\_first}), \ i = 1\ldots.N$$

$$\text{Max\_second} = \max\,(\text{Min\_i\_second}), \ i = 1\ldots.N$$

$$M = \max\,(\text{Max\_first}, \text{Max\_second})$$

where, j represent images, and
N is the total number of images in the plurality of images, and

M indicates a weight associated with a weak match. In an embodiment, M may be a weight associated with a worst possible match.

In an embodiment, the values of Min_i_first and Min_i_second indicate the robust matches of edge pairs for every first-side edge portion and the second-side edge portion. The value of Max_first indicates the weak match for any first-side edge portion, and the value of Max_second indicates the weak match for any second-side edge portion. As used herein, the term 'robust match' may be construed as indicative of a substantial overlapping between the edge portions of configuring an edge pair. Similarly, the term 'weak match' may be construed as indicative of a poor overlapping between the edge portions configuring an edge pair. In an embodiment, the weight of image pairs associated with one of the dummy first-side edge portions and the dummy second-side edge portion may be given by:

$$D(i\_first, BG) = M - Min\_i\_first;$$

$$D(i\_second, BG) = M - Min\_i\_second.$$

In an embodiment, the first set of weights are assigned in a manner that the weight of the edge pair having a dummy edge portion is inversely proportional to the weight of its robust match. In other words, if the least weight of any edge pair comprising a right-side edge portion to all the available left-side edge portion is high, then the weight associated with the edge pair having a dummy edge portion is low, and vice versa. In an embodiment, the correct sequence/order of the images can then be similarly extracted using the Hungarian algorithm for bipartite graph matching. In an example embodiment, a processing means may be configured to arrange the plurality of images in a first sequence based on the first set of weights assigned to the first plurality of edge pairs. An example of the processing means may include the processor 202, which may be an example of the controller 108.

In an embodiment, the processor 202 is caused to, with the content of the memory 204, and optionally with other components described herein, to cause the apparatus 200 to compare the first set of weights assigned to the first plurality of edge pairs with a predetermined threshold weight. In an embodiment, if it is determined that a plurality of weights are less than a predetermined threshold weight, then it may be determined that the first sequence of images is associated with a wide angle image having a span of 360 degrees image. In an embodiment, the wide angle image having a span of 360 degrees may be a 360 degree panorama image. Alternatively, if it is determined that the plurality of weights are greater than or equal to the predetermined threshold weight, then, the first sequence may be split into a plurality of sub-sequences based on the edge pairs having weights greater than the predetermined threshold weight. For example, the first sequence of images may include images I1, I2, I3, I4, I5, I6 I7, I8, and I9, and the weights associated with the edge pairs such as right edge of image I3 and left edge of image I4, and right edge of image I6 and left edge of image I7 are greater than the predetermined threshold weight, then the first image sequence may be split at the edge pairs (I3-I4) and (I6-I7). The splitting of the first sequence may generate a plurality of sub-sequences. For example, the splitting of the first sequence (I1, I2, I3, I4, I5, I6 I7, I8, I9) at the edge pairs (I3-I4) and (I6-I7) may generate a plurality of sub-sequences SI(I1, I2, I3), S2(I4, I5, I6), and S3(I7, I8, I9). In an embodiment, each of the plurality of sub-sequences may be equivalent to images, such as one dimensional panorama image.

In an embodiment, the processor 202 is caused to, with the content of the memory 204, and optionally with other components described herein, to cause the apparatus 200 to determine a set of third-side edge portions and a set of fourth-side edge portions associated with the plurality of sub-sequences. In an embodiment, the set of the third-side edge portions being opposite to the set of the fourth-side edge portions. For example, if the plurality of images are arranged in a horizontal manner in the first sequence (for example, images I1, I2, I3 of sub-sequence S1, images I4, I5, I6 of sub-sequence S2, and the like), then the set of third-side edge portion and the fourth-side portions of the sub-sequences may include top and bottom side edge portions of the sub-sequences. Similarly, if the plurality of images are arranged in a vertical manner in the first sequence, then the set of third-side edge portion and the fourth-side portions of the sub-sequences may include left side edge and right side edge portion of the sub-sequences. It will be understood that various variations of the arrangement of the third-side edge portions and the fourth-side edge portions of the sub-sequences may be possible.

In an embodiment, the processor 202 is caused to, with the content of the memory 204, and optionally with other components described herein, to cause the apparatus 200 to determine a second plurality of edge pairs between the set of third-side edge portions and the set of fourth-side edge portions. In an embodiment, an edge pair of the second plurality of edge pairs comprises a third-side edge portion and a fourth-side edge portion. In an embodiment, the second plurality of edge pair may be determined by determining bipartite graph between the set of third-side edge portions and the set of fourth-side edge portions. In an embodiment, the bipartite graph comprises a plurality of nodes and a plurality of edges such that the plurality of edges connects every node to every other node. In particular, the plurality of nodes comprises a first set of nodes representing the set of third-side edge portions and second set of nodes representing the set of fourth-side edge portions of the plurality of images. The representation of the example edge portions as nodes, and example edges connecting the example nodes in form of a bipartite graph will be explained in detail with reference to FIGURES 4A and 4B.

In an embodiment, the processor 202 is caused to, with the content of the memory 204, and optionally with other components described herein, to cause the apparatus 200 to assign a second set of weights to the second plurality of edge pairs based on a pair-wise matching between the set of third-side edge portions and the set of fourth-side edge portions. In an embodiment, the weights may be assigned by determining histograms associated with the third-side edge portion and the fourth-side edge portion associated with the each edge pair of the second plurality of edge pairs, and a distance is computed between the histograms. In an embodiment, the distance is indicative of the weight associated with the edge pair.

In an embodiment, the processor 202 is caused to, with the content of the memory 204, and optionally with other components described herein, to cause the apparatus 200 to arrange the plurality of images in a second sequence based on the weights assigned to the second plurality of edge pairs. For example, the weights assigned to the edge pairs between the sub-sequences S1-S2, S2-S3 and S3-S1 may be in an order of weights such as weights W1, W2, and W3, such that W1 is equal to W2 while W3 is relatively much higher. In such an exemplary scenario, the sub-sequences may be arranged in a second sequence, wherein S1 is followed by S2, and S2 is followed by S3. In an embodiment, the first sequence of images and second sequence of images may collectively facilitate in generation of a two dimensional panorama image. For example, once the plurality of images is arranged in the second sequence, a two dimensional panorama image may be generated, for instance by stitching the plurality of images arranged in the second sequence.

FIGURE 3 illustrates vector projections of images for arranging a plurality of images in a sequence, in accordance with an embodiment. In an embodiment, the vector projections are configured to facilitate determination of the first plurality of edge pairs between a set of first-side edge portions and a set of second-side edge portions associated with a plurality of images. For example, as illustrated in FIGURE 3, the plurality of images may include a first image 302 and a second image 304 such that the first image 302 and the second image 304 may comprise a common portion or an matching region between them. In particular, a right-edge portion of the first image overlaps with a left-edge end portion of the second image.

The vector projections 310 of the first image 302 and the second image 304 are illustrated in FIGURE 3. As illustrated, the vector projection of the overlapping portion between the first image and the second image are similar. For example, vector projections illustrated by regions 312 and 314 corresponds to an overlap region between the first image 302 and the second image 304. It is noted that the region 312 and 314 corresponds to the right side edge portion and the left side edge portion of images 302 and 304, respectively.

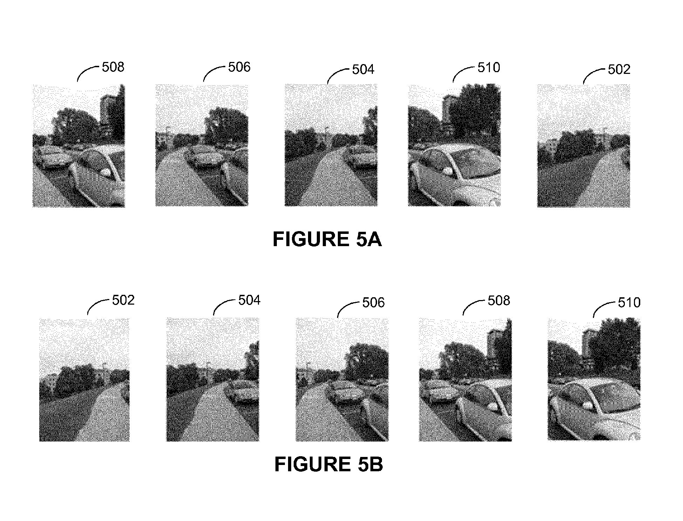

In an embodiment, the vector projections of the images of the plurality of image may be matched for determining an overlapping region between the plurality of images. In particular, the vector projections of the edge pairs comprising one edge portion associated with the set of the first-side edge portions and another edge portion associated with the set of the second-side edge portions, may be matched. In an embodiment, the matching of the vector projections is performed to determine a first plurality of edge pairs between the set of first-side edge portions and the set of second-side edge portions. In an embodiment, the matching of the vector projections may be performed based on a NCC of the first plurality of edge pair. As used herein, the NCC is utilized as a similarity measure in determining a matching or overlapping between various images associated with a sequence. The NCC gives an approximate matching between the first plurality of edge pairs. The ordering of the plurality of images based on determination of the first plurality of edge pairs is explained in detail with reference to FIGURE 5A and 5B.

FIGURES 4A and 4B illustrate bipartite graph matching for aligning edges of a plurality of images for arranging images in a sequence, in accordance with an embodiment. FIGURE 4A illustrates bipartite graph matching for generating a 360 degree panorama image, and FIGURE 4B illustrates bipartite graph matching for generating a non 360 degree panorama image. As discussed with reference to FIGURES 2 and 3, the plurality of images may be unordered and may have to be arranged in a sequence, for example, a sequence of capture of images before being utilized for generating the panorama image. In an embodiment, the plurality of images may be arranged in a sequence by utilizing the bipartite graph matching method.

In an embodiment, for arranging the plurality of images according to the bipartite graph, a set of first-side edge portions and a set of side-side edge portions associated with the plurality of images may be determined. In an embodiment, when the plurality of images are captured by traversing the image capturing device from left to right or from right to left, then the first-side edge portions and the second-side edge portions may comprise left side edge portions and the right-side edge portions of the plurality of images. In the present embodiment, the plurality of images may be arranged in a sequence to generate a one-dimensional horizontal panorama image. In another embodiment, if the plurality of images is captured by traversing the image capturing device from top to bottom or from bottom to top, then the first-side edge portions and the second-side edge portions may comprise upper-side edge portions and the lower-side edge portions of the plurality of images. In such a scenario, the plurality of images may be arranged in a sequence to generate a one-dimensional vertical panorama image.

As illustrated in FIGURES 4A and 4B, for the plurality of images 410, the set of first-side edge portions may comprise for example, first-side edge portions 412, 414, 416, 418, and 420. Similarly, the set of second-side edge portions for the plurality of images may comprise the second-side edge portions 422, 424, 426, 428, and 430. In an embodiment, the bipartite graph for the plurality of images 410 comprises a first plurality of nodes and a second plurality of nodes representing the first-side edge portions 412, 414, 416, 418, 420 and the second-side edge portions 422, 424, 426, 428, and 430, and a plurality of edge portions 432, 434, 436, 438, and the like connecting the set of first-side edge portions 412, 414, 416, 418, 420 and the set of second-side edge portions 422, 424, 426, 428, and 430. In an example embodiment, each left-side edge portion is connected to each of the set of the right-side edge portion, and each of the first-side edge portion is connected to each of the set of the second-side edge portion by means of edge portions. For example, with reference to FIGURES 4A and 4B, the left side edge portion is connected to the set of right side edge portions by means of edge portions. Similarly, the right side edge portion is connected to all other left side edge portions.

In an embodiment, each of the first plurality of edge pairs connecting the set of first side edge portions with the second side edge portions may be assigned a weight based on an amount of matching between the two edge portions (a first side edge portion and a second side edge portion) forming the edge pairs. In an embodiment, the edge pair associated with a maximum matching may be assigned a minimum weight. It should be noted that an edge pair comprising the first side edge portion and the second side edge portion of the same image may be assigned a maximum or infinite weight.

Referring to FIGURE 4B, in an embodiment, the plurality of images 450 may be associated with a non 360 degrees panorama image. In an embodiment, the bipartite graph for the plurality of images 450 comprises a first plurality of nodes and a second plurality of nodes representing the first-side edge portions 452, 454, 456, 458 and the second-side edge portions 462, 464, 466, and 468, and a plurality of edge portions 472, 474, 476, 478, and the like connecting the set of first-side edge portions 452, 454, 456, and 458 and the set of second-side edge portions 462, 464, 466, and 468.

In this embodiment, the first plurality of edge pairs comprises additional edge pair associated with the peripheral images of the sequence of images, for example, additional edge pairs 460, 470, such that the additional peripheral edge portions may not find suitable match/overlap region with any of the other edge portions. An example of the non-overlapping edge portions associated with a non-360 degree panorama image is illustrated in FIGURES 5A and 5B.

In an embodiment, the first set of weights assigned to the plurality of edge pairs may be arranged in form of a matrix. For example, in an embodiment, wherein the panorama image is 360 degree panorama image, for a sequence of images comprising N images, the dimensions of the matrix may be NXN, wherein the rows and columns of the matrix may be associated with the first side edge portions and the second side edge portions, and elements of the matrix may comprise first set of weights indicative of matching between the first-side edge portions and the second-side edge portions. In an embodiment, the ordering of the plurality of images may be determined by solving the matrix for a robust weighted match of edge pairs in the bipartite graph. In an embodiment, the weighted bipartite graph may be solved by utilizing the Hungarian algorithm. In an embodiment, the Hungarian algorithm may be implemented with a complexity of $O(N^3)$. The Hungarian algorithm may be utilized for solving the bipartite matching to generate a correct ordering of images in a sequence.

In an embodiment, for a non-360 degree panorama image, the bipartite graph is modified to include an additional or a dummy first-side edge portion in the set of first-side edge portions and an additional or a dummy second-side edge portion in the set of second-side edge portions. In an embodiment, the additional or a dummy first-side edge portion and the additional or a dummy second-side edge portion may be paired with the remaining set of the second-side edge portions and the set of the first-side edge portions, respectively to form additional plurality of edge pairs. In an embodiment, the additional plurality of edge pairs may be arranged in the matrix such that the matrix may now be modified to a (N+1)X(N+1) matrix. In an embodiment, the weight may be assigned to each of the elements associated with the additional edge pairs of the (N+1)X(N+1) matrix.

$$Min\_i\_first = \min (D(i\_first, j\_second)), \ j = 1....N$$

$$Min\_i\_second = \min (D(i\_second, j\_first)), \ j = 1....N$$

$$Max\_first = \max (Min\_i\_first), i = 1....N$$

$$\text{Max\_second} = \max(\text{Min\_i\_second}), i = 1....N$$

$$M = \max(\text{Max\_first}, \text{Max\_second})$$

In an embodiment, the lower values of the weights assigned to the edge pairs may indicate the robust matches of the edge pairs for every first and second edge portions. For example, the values of Min_i_first indicate the robust match for the first edge pairs, and the value of Min_i_second indicate the robust match for the second edge pairs. Similarly, the values of Max_first indicate the weak match for the first edge pairs, and the values of Max_second indicate the weak match for the second edge pairs. In an embodiment, the weight to be assigned to the existing first set of nodes and the second set of nodes may be defined as a difference of the weight (represented as M) of worst of all the possible robust matches and, M indicates the weight of the weakest of all possible robust matches and the value of the respective minimum edge pair. In an embodiment, the weights of an existing first or second side edge portion to the dummy first or second side edge portion may be defined as:

$$D(\text{i\_first}, BG) = M - \text{Min\_i\_first};$$

$$D(\text{i\_second}, BG) = M - \text{Min\_i\_second};$$

In an embodiment, the weights of an existing first side edge portion or second side edge portion to the dummy first or second side edge portion is inversely proportional to the weight of a robust match. In other words, if the least cost of matching a right image edge to all available left image edges is high, the cost of its matching the background dummy node is low, and vice versa. The correct sequence of the plurality of images may then be similarly extracted using the Hungarian algorithm for bipartite graph matching.

FIGURES 5A and 5B illustrates a plurality of images and a first plurality of edge pairs associated with the plurality of images, in accordance with an embodiment. As illustrated in FIGURE 5A, the plurality of images includes images, for example, images 502, 504, 506, 508, 510. In an embodiment, the plurality of images may be unordered, and it may be required to order the images in a sequence before being utilized for generating a panorama image. As used herein, the term 'sequence' may be construed as an arrangement of the images in an order of capture of the images. For example, the images 502, 504, 506, 508, 510 may be captured successively. However, the images 502, 504, 506, 508, 510 may be stored in a random manner, so 'arranging the images in a sequence' may be construed as placing/positioning the images in an order of capture of the images. In an embodiment, placing the images in the sequence may be configured to construct a wide-angle image of the scene. In an embodiment, the plurality of images may be stored in a memory, for example, the memory 204 of a device, for example, the device 200. In an embodiment, the plurality of images may be received from external storage medium such as DVD, Compact Disk (CD), flash drive, memory card, or received from external storage locations through the Internet, Bluetooth®, local area network, and the like.

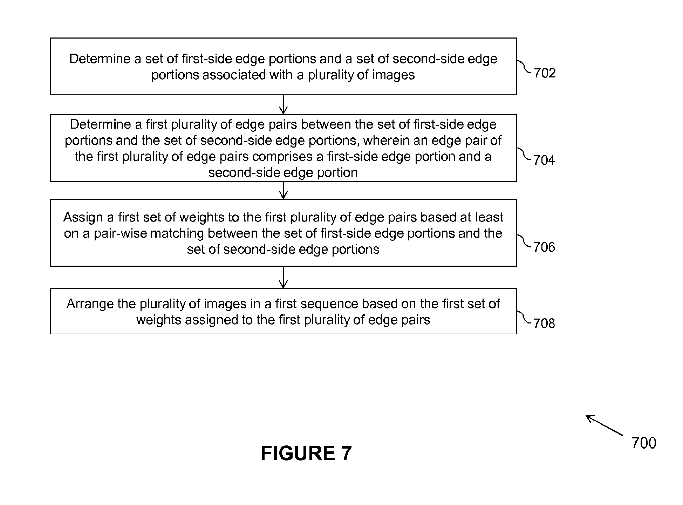

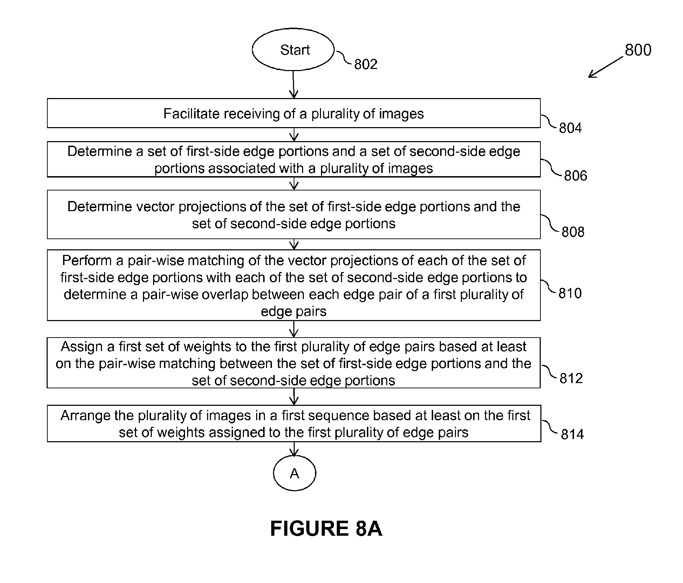

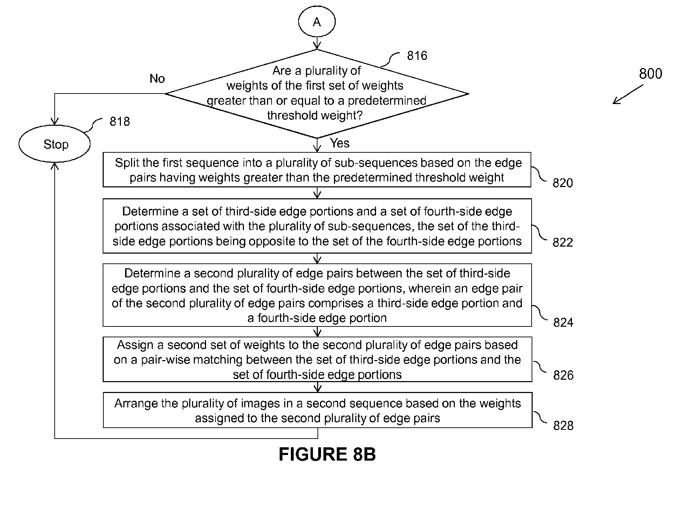

In an embodiment, each of the plurality of images 502, 504, 506, 508, 510 may include a left-edge portion and a right-edge portion such that a right-edge portion of one image may overlap with at least a left edge portion of another image of the plurality of images. In an embodiment, the unordered plurality of images 502, 504, 506, 508, 510 may be ordered at least in parts and under certain circumstances automatically. As discussed with reference to FIGURES 2 and 4B, in an embodiment, the plurality of images may be ordered in a sequence of, for example capture of the images to construct a panorama image by assigning a first set of weight to various edge pairs of the plurality of images 502, 504, 506, 508, 510, and arranging the plurality of images 502, 504, 506, 508, 510 in a sequence or order. Methods for arranging the plurality of images in a sequence is explained in FIGURES 7 and 8.

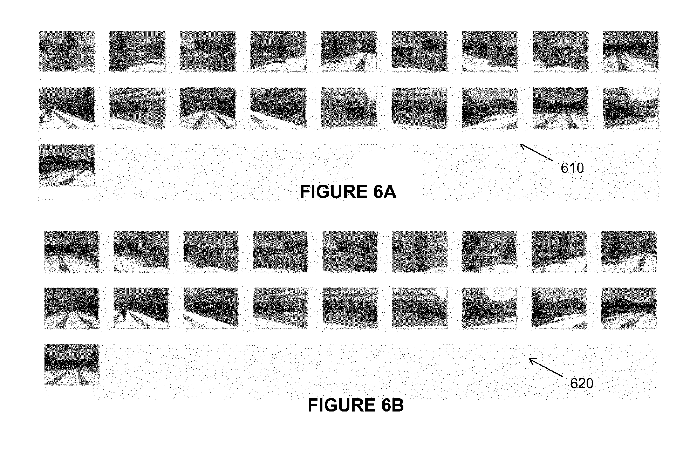

FIGURES 6A and 6B illustrate a plurality of images that may be ordered in a sequence for generating a 360 degree panorama image. As illustrated in FIGURE 6A, the plurality of images 610 may initially be arranged in an unordered sequence. In an embodiment, the plurality of images may be unordered, and may be ordered in a sequence before being utilized for generating a panorama image. In an embodiment, the unordered plurality of images may be ordered at least in parts and under certain circumstances automatically, as explained with reference to FIGURE 4A. The plurality of unordered images, as illustrated in FIGURE 6A may be ordered, and arranged in a sequence of images such images 620, as illustrated in FIGURE 6B. In an embodiment, the plurality of images ordered in a sequence may be utilized to generate a panorama image, for example a 360 degree panorama image. It will be noted that in the present embodiment, the plurality of images are associated with a rotation of an image capturing device in a horizontal direction, for example, from left to right or from right to left. However, the plurality of image may be associated with a rotation of the image capturing device in a vertical direction for example, from top to bottom or from bottom to top.

FIGURE 7 is a flowchart depicting an example method 700 for arranging a plurality of images in a sequence, in accordance with an example embodiment. The method depicted in the flow chart may be executed by, for example, the apparatus 200 of FIGURE 2. In an embodiment, the plurality of images may be associated with a scene, and may be unordered. In an embodiment, the plurality of images may be ordered arranged in the sequence based on a determination of an matching between the edge portions of plurality of images.

In an embodiment, each of the plurality of images may include a first-side edge portion and a second-side edge portion such that the first-side edge portion is opposite to the second-side edge portion. For example, the first-side edge portion may comprise a left side edge portion and the second-side edge portion may comprise a right side edge portion, and vice-versa. In an example embodiment, the first-side edge portion may comprise a top-side edge portion and the second-side edge portion may comprise a bottom-side edge portion, and vice-versa.

At block 702, a set of first-side edge portions and a set of second-side edge portions associated with the plurality of images are determined. In an embodiment, determining the set of first-side edge portions and the set of second-side edge portions comprises determining vertical projections of the plurality of images, and matching the vertical projections for determining a matching between the edge portions associated with the set of first-side edge portions and the set of second-side edge portions. For example, a left side edge portion of a first image may comprise a matching region that may be common with a right-side edge portion of a second image. Similarly, in an example embodiment, a top-side edge portion of an image may include a portion that may be common with a bottom-side edge portion of a second image.

At block 704, a first plurality of edge pairs between the set of first-side edge portions and the set of second-side edge portions is determined. In an embodiment, an edge pair of the first plurality of edge pairs comprises a first-side edge portion of one image and a second-side edge portion of another image of the plurality of images. In an embodiment, the first plurality of edge pairs is determined based on a matching between the set of first side edge portions and the set of second side edge portions. In an embodiment, the first plurality of edge pairs may be determined by matching the vector projections of each of the set of first-side edge portions with each of the set of second-side edge portions to determine a pair-wise matching between each edge pair of the first plurality of edge pairs. In an embodiment, the vector projections associated with the set of the first-side edge portions and the set of the second-side edge portions may be matched based on a normalized cross correlation of the first plurality of edge pairs.

At block 706, a first set of weights may be assigned to the first plurality edge pairs based at least on the pair-wise matching between the set of first-side edge portions and the set of second-side edge portions. In an embodiment, for each of the first plurality of edge pairs, the weights may be assigned to the first plurality edge pairs by computing EOG on an overlapping area between the edge portions associated with the plurality of edge pairs images. In an embodiment, a distance may be computed between the EOG of the edge portions associated with the edge pairs, and based on the distance, a weight may be assigned to the edge pair of the plurality of edge pairs. In an embodiment, the distance may be a Bhattacharyya distance. As used herein, 'Bhattacharyya distance' refers to a coefficient that may be indicative of an overlap between the two edge portions associated with an edge pair. As disclosed herein, the pair-wise matching between the set of first-side edge portions and the set of second-side edge portions is performed based on by computing the EOG on the overlapping area, and determining the Bhattacharyya distance. However, it will be understood that the pair-wise matching between the portions of images may be performed by a variety of other methods other than EOG that are configured to determine histograms, for example, Histogram of Gradients (HOG), integral projections (horizontal projections for left-right panorama images, and vertical projections for top-bottom panorama images), Local binary pattern histogram (LBP), and the like. Additionally, various other methods (apart from computation of the Bhattacharyya distance) may be utilized for determination of distance between histograms or distributions, such as, a cost of dynamic time warping technique (with integral projections as features), cosine distance technique (with LBP histograms), and the like.

In an embodiment, the first set of weights may be arranged in form of matrix, as explained with reference to FIGURE 2. For example, for N images, the dimensions of the matrix may be NXN. In an embodiment, the plurality of images may be associated with a 360 degree panorama. In an embodiment, plurality of images may be associated with a non-360. In an embodiment, since the non-360 degree panorama may include two peripheral images, for example a left peripheral image and a right peripheral image (in case of a horizontal 1-D panorama image) such that the peripheral edge portions of the two peripheral images may not have a common overlapping portion with either of the edge portions of the remaining images. For a non-360 degree panorama image, the weights may be assigned by determining two dummy edge portions, for example, a dummy first-side edge portion and a dummy second-side edge portion associated with the first peripheral image and the second peripheral image, respectively. In an embodiment, the dummy first-side edge portion and the dummy second-side edge portion are determined based on the first set of weights assigned to the first set of plurality of edge pairs. In an embodiment, the first set of weights may be compared with a predetermined threshold weight. In an embodiment, the predetermined threshold weight may be indicative of poor matching between the set of the first-side edge portions and the set of second-side edge portions. In an embodiment, the weights greater than the predetermined threshold weight may be indicative of edge portion that may have nil matching between them, for example the extreme edge portions of the peripheral images of a sequence of images.

In an embodiment, the first set of weights may be assigned to the first plurality of edge pairs by generating a bipartite graph between the set of first-side edge portions and a set of second-side edge portions and connecting the set of first-side edge portions and the set of second-side edge portions by the first plurality of edge pairs. In an embodiment, the first set of weight may be assigned to the first plurality of edge pairs based on a pair-wise matching between the edge portions comprising the edge pair.

At block 708, the plurality of images may be arranged in a first sequence based on the weights assigned to the first plurality of edge pairs. In an embodiment, arranging the plurality of images in the first sequence facilitates in generating a panorama image. For example, the plurality of images may be arranged in the first sequence and stitched in that sequence to generate the panorama image.

In an example embodiment, a processing means may be configured to perform some or all of: determining a set of first-side edge portions and a set of second-side edge portions associated with a plurality of images, the set of the first-side edge portions being opposite to the set of the second-side edge portions; determining a first plurality of edge pairs between the set of first-side edge portions and the set of second-side edge portions, an edge pair of the first plurality of edge pair comprising a first-side edge portion and a second-side edge portion; assigning a first set of weights to the first plurality of edge pairs based at least on a pair-wise matching between the set of first-side edge portions and the set of second-side edge portions; and arranging the plurality of images in a sequence based on the first set of weights assigned to the first plurality of edge pairs. An example of the processing means may include the processor 202, which may be an example of the controller 108. Another method for arranging the plurality of images in a sequence is explained in detail with reference to FIGURE 8.

FIGURES 8A and 8B illustrate a flowchart depicting an example method 800 for arranging images in a sequence, in accordance with another example embodiment. The method 800 depicted in flow chart may be executed by, for example, the apparatus 200 of FIGURE 2. Operations of the flowchart, and combinations of operation in the flowchart, may be implemented by various means, such as hardware, firmware, processor, circuitry and/or other device associated with execution of software including one or more computer program instructions. For example, one or more of the procedures described in various embodiments may be embodied by computer program instructions. In an example embodiment, the computer program instructions, which embody the procedures, described in various embodiments may be stored by at least one memory device of an apparatus and executed by at least one processor in the apparatus. Any such computer program instructions may be loaded onto a computer or other programmable apparatus (for example, hardware) to produce a machine, such that the resulting computer or other programmable apparatus embody means for implementing the operations specified in the flowchart. These computer program instructions may also be stored in a computer-readable storage memory (as opposed to a transmission medium such as a carrier wave or electromagnetic signal) that may direct a computer or other programmable apparatus to function in a particular manner, such that the instructions stored in the computer-readable memory produce an article of manufacture the execution of which implements the operations specified in the flowchart. The computer program instructions may also be loaded onto a computer or other programmable apparatus to cause a series of operations to be performed on the computer or other programmable apparatus to produce a computer-implemented process such that the instructions, which execute on the computer or other programmable apparatus provide operations for implementing the operations in the flowchart. The operations of the method 800 are described with help of apparatus 200. However, the operations of the method can be described and/or practiced by using any other apparatus.

The method for arranging the plurality of images is initiated at block 802. At block 804, receiving of a plurality of images is facilitated. In an embodiment, the plurality of images may be pre-recorded and stored in the apparatus 200. In another embodiment, the plurality of images may be captured by utilizing a camera module, for example the camera module 122 of a device, for example the device 100, and stored in the memory of the device 100. In yet another embodiment, the device may receive the plurality of images from an internal memory such as hard drive, RAM of an apparatus, for example the apparatus 200, or from external storage medium such as DVD, CD, flash drive, memory card, or from external storage locations through Internet, Bluetooth®, and the like. The apparatus may also receive the plurality of images from the memory thereof.

In an embodiment, each of the plurality of images may include a first-side edge portion and a second-side edge portion such that the first-side edge portion is opposite to the second-side edge portion. In an embodiment, the first-side edge portion and the second-side edge portion may include a left side edge portion and a right side edge portion, respectively of an image or vice-versa. In another embodiment, the first-side edge portion and the second-side edge portion may include a topside edge portion and a bottom side edge portion, respectively of an image or vice-versa. At block 806, a set of first-side edge portions and a set of second-side edge portions associated with a plurality of images is determined. In an embodiment, since the plurality of images are associated with a scene, and are captured by traversing an image capturing device in at least one direction, for example, a horizontal direction and/or a vertical direction, the images associated with the plurality of images may include certain overlapping portions.

For example, a first side edge portion of one image may overlap with a second side edge portion of another image.

At block 808, vector projections of the set of first-side edge portions and the set of second-side edge portions may be determined. The determination of the vector projections of the set of first-side edge portions and the set of second-side edge portions is already explained with respect to FIGURE 3. In an embodiment, when the the vector projection of a first side edge portion of an image is determined to be similar to the vector projection of a second side edge portion of an image, then the two images may be determined to adjacent images and comprise of an overlapping portion between them.

At block 810, the vector projections of each of the set of first-side edge portions is matched with the vector projections of each of the set of second-side edge portions to determine a pair-wise matching between each edge pair of a first plurality of edge pairs. In an embodiment, the pair-wise matching between the first plurality of edge pairs may be determined by computing the histograms or distributions of the edge portions of the plurality of images, and measuring distance between the corresponding histograms. In an embodiment, the histograms associated with the plurality of images may be computed by using techniques, such as EOG, HOG, integral projections, LBP, and the like. In an embodiment, the distance between the histograms may be computed by utilizing techniques, such as cost of dynamic time warping (with integral projections as features), cosine distance (with LBP histograms), and the like.

In an embodiment, at least one of the edge portions of the first set of edge portions and the second set of edge portions may not be matched with any of the edge portions. For example, in case of adjacent images, such as a first peripheral image and a second peripheral image, the non-overlapping opposite edge portions thereof, such as first-side edge portion of the first peripheral image and the second-side edge portion of the second peripheral image, may be determined by assuming a dummy first-side edge portion and a dummy second-side edge portion. In an embodiment, the dummy first-side edge portion and the dummy-second side edge portion may be associated with a relatively high weight because of existence of high non-overlapping between the dummy-first side edge portion and the second-side edge portions, and between the dummy-second side edge portion and the first-side edge portions. In an embodiment, the dummy edge portions may be determined for the case wherein the plurality of images are associated with a non-360 degrees view of a scene. Examples of such images may include a one dimensional non-360 degrees panorama image, a two dimensional non-360 degrees panorama image, and the like.

At block 812, a first set of weights may be assigned to the first plurality of edge pairs based at least on a pair-wise matching between the set of first-side edge portions and the set of second-side edge portions. In an embodiment, the weights assigned to the plurality of edge pairs may be represented in form of a NXN matrix. In an embodiment, the dimensions of the matrix are associated with a number of first-side edge portions and a number of second-side edge portions of the plurality of images. For example, the plurality of images (N) associated with a 360 degree panorama image, the dimensions of a matrix may be NXN. Also, corresponding to the plurality of images associated with a non-360 degrees panorama image, the dimensions of a matrix corresponding to N images may be (N+1)X(N+1). In an embodiment, an additional node in the matrix of weights corresponding to non-360 degrees panorama image is associated with the additional dummy nodes being determined.

In an embodiment, the weights to the dummy edge portions, for example the first dummy edge portion and the second dummy edge portion may be assigned in a manner that the weight of the edge pair having a dummy edge portion is inversely proportional to the weight of its robust match. In other words, if the least weight of any edge pair comprising a right-side edge portion to all the available left-side edge portion is high, then the weight associated with the edge pair having a dummy edge portion is low, and vice versa.

At block 814, the plurality of images may be arranged in a first sequence based on the first set of weights assigned to the first plurality of edge pairs. In an embodiment, the plurality of images are arranged in the first sequence by selecting, for each row of the matrix, an edge pair between the set of first-side edge portions and the set of second-side edge portions that is associated with a minimum weight. In an embodiment, the minimum weight is associated with the maximum pair-wise matching. In an embodiment, the first sequence of images may be configured to generate a panorama image. In an embodiment, the first sequence of images may be configured to generate a one dimensional panorama image. In an embodiment, the first sequence of images may be configured to generate a 360 degree panorama image. As disclosed herein, the 360 degree panorama image may refer to a panorama image being generated by rotating and capturing a wide range image around a scene wherein the first end of the image is logically connected to the second end of another image. Accordingly, the first-side edge portion of the first peripheral image is connected to the second-side edge portion of the second peripheral image. In an embodiment, a non-360 degree panorama image may be a 180 degree panorama image, wherein the sequence comprises plurality of images arranged in a manner that the first left-side edge portion of the left most image and the right-side edge portion of the right most image of the sequence of images have substantially nothing in common.

In an embodiment, the first sequence of images may be associated with a 360 degree panorama image. In this embodiment, the first sequence of images may be generated based on a determination of weights associated with the first set of weights. In an embodiment, it is determined at block 816, whether weights associated with the first set of weights is greater or equal to a predetermined threshold weight. If it is determined at block 816 that a plurality of weights are less than the predetermined threshold weight, then it may be determined that the first sequence of images is associated with a 360 degrees image, and the method may be terminated at block 818. If however, at block 816 it is determined that the plurality of weights are greater than or equal to the predetermined threshold weight, then at block 820, the first sequence may be split into a plurality of sub-sequences based on the edge pairs having weights greater than the predetermined threshold weight. For example, the first sequence of images may include images I1, I2, I3, I4, I5, I6 I7, I8, and I9, and the weights associated with the edge pairs such as right edge of image I3 and left edge of image I4, and right edge of image I6 and left edge of image I7 are greater than the predetermined threshold weight, then the first image sequence may be split at the edge pairs (I3-I4) and (I6-I7). The splitting of the first sequence may generate a plurality of sub-sequences. For example, the splitting of the first sequence (I1, I2, I3, I4, I5, I6 I7, I8, I9) at the edge pairs (I3-I4) and (I6-I7) may generate a plurality of sub-sequences S1(I1, I2, I3), S2(I4, I5, I6), and S3(I7, I8, I9). In an embodiment, each of the plurality of sub-sequences may be equivalent to images, such as one dimensional image.

At block 822, a set of third-side edge portions and a set of fourth-side edge portions associated with the plurality of sub-sequences may be determined. In an embodiment, the set of the third-side edge portions may be opposite to the set of the fourth-side edge portions. For example, if the plurality of images are arranged in a horizontal manner in the first sequence (for example, images I1, I2, I3 of sub-sequence S1, images I4, I5, I6 of sub-sequence S2, and the like), then the set of third-side edge portion and the fourth-side portions of the sub-sequences may include top and bottom side edge portions of the sub-sequences. Similarly, if the plurality of images are arranged in a vertical manner in the first sequence, then the set of third-side edge portion and the fourth-side portions of the sub-sequences may include left and right side edge portions of the sub-sequences. It will be understood that various variations of the arrangement of the third-side edge portions and the fourth-side edge portions of the sub-sequences may be possible.

At block 824, a second plurality of edge pairs between the set of third-side edge portions and the set of fourth-side edge portions may be determined. In an embodiment, an edge pair of the second plurality of edge pairs comprises a third-side edge portion and a fourth-side edge portion. In an embodiment, the second plurality of edge pair may be determined by determining bipartite graph between the set of third-side edge portions and the set of fourth-side edge portions. In an embodiment, the bipartite graph comprises a plurality of nodes and a plurality of edges such that the plurality of edges connects every node to every other node. In particular, the plurality of nodes comprises a first set of nodes representing the set of third-side edge portions and second set of nodes representing the set of fourth-side edge portions of the plurality of images. The representation of the example edge portions as nodes, and example edges connecting the example nodes in form of a bipartite graph is explained in detail with reference to FIGURES 4A and 4B. In particular, FIGURE 4A represent bipartite graph for the case of a 360 degrees panorama image, while FIGURE 4B represent bipartite graph for the case of a non 360 degrees panorama image.

At block 826, a second set of weights is assigned to the second plurality of edge pairs based on a pair-wise matching between the set of third-side edge portions and the set of fourth-side edge portions. In an embodiment, the second set of weights may be assigned by determining histograms associated with the third-side edge portion and the fourth-side edge portion associated with the each edge pair of the second plurality of edge pairs, and computing a distance between the histograms. In an embodiment, the distance is indicative of the weight associated with the edge pair. As disclosed herein, the pair-wise matching between the set of third-side edge portions and the set of fourth-side edge portions is performed by computing the EOG on the overlapping area, and determining the Bhattacharyya distance. However, it will be understood that the pair-wise matching between the portions of images may be performed by a variety of other methods other than EOG that are configured to determine histograms, for example, HOG, Integral projections (for example, horizontal projections for left-right image sequence and vertical projection for top-bottom image sequence), LBP, and the like. Additionally, various other methods (apart from computation of the Bhattacharyya distance) may be utilized for determination of distance between histograms or distributions, such as, a cost of dynamic time warping technique (with integral projections as features), cosine distance technique (with LBP histograms), and the like.

At block 828, the plurality of images may be arranged in a second sequence based on the weights assigned to the second plurality of edge pairs. For example, the weights assigned to the edge pairs between the sub-sequences S1-S2, S2-S3 and S3-S1 may be in an order of W1, W2, and W3 such that W1 is equal to W2 while W3 is relatively much higher. In such an exemplary scenario, the sub-sequences may be arranged in a second sequence, wherein S1 is followed by S2, and S2 is followed by S3. In an embodiment, the second sequence of images may facilitate in generation of a two dimensional panorama image. For example, once the plurality of images are arranged in the second sequence, a two dimensional panorama image may be generated, for instance by stitching the plurality of images arranged in the second sequence. The method for arranging the plurality of images in a sequence, for example the first sequence and the second sequence may be terminated at block 818.

To facilitate discussion of the method 800 of FIGURE 8, certain operations are described herein as constituting distinct steps performed in a certain order. Such implementations are exemplary and nonlimiting. Certain operation may be grouped together and performed in a single operation, and certain operations can be performed in an order that differs from the order employed in the examples set forth herein. Moreover, certain operations of the method 800 are performed in an automated fashion. These operations involve substantially no interaction with the user. Other operations of the method 800 may be performed by in a manual fashion or semi-automatic fashion. These operations involve interaction with the user via one or more user interface presentations.

Without in any way limiting the scope, interpretation, or application of the claims appearing below, a technical effect of one or more of the example embodiments disclosed herein is to arrange a plurality of images associated with a scene in a sequence. As explained in FIGURES 2 - 8B, the plurality of images may be associated with one of a 360 degrees panorama and a non-360 degrees panorama image. In an embodiment, the plurality of images may be arranged in a sequence by determining and overlap between the plurality of images, and a weight may be assigned to each of the overlapping edge pairs. The plurality of images may be arranged in the sequence based on the assigned weight. The disclosed method is performed at least in parts and under certain circumstances automatically after the capture of the images. Accordingly, while arranging the plurality of images in the sequence, no user interaction is required. Moreover, the disclosed method facilitates in arranging the plurality of images associated with a 360 degree panorama image as well as with a non-360 degree panorama image.

Various embodiments described above may be implemented in software, hardware, application logic or a combination of software, hardware and application logic. The software, application logic and/or hardware may reside on at least one memory, at least one processor, an apparatus or, a computer program product. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of an apparatus described and depicted in FIGURES 1 and/or 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications, which may be made without departing from the scope of the present disclosure as defined in the appended claims.

**Claims**

1. A method comprising:

   determining a set of first-side edge portions and a set of second-side edge portions associated with a plurality of images; determining a first plurality of edge pairs between the set of first-side edge portions and the set of second-side edge portions, an edge pair of the first plurality of edge pair comprising a first-side edge portion of an image and a second-side edge portion of an another image of the plurality of images;
   assigning a first set of weights to the first plurality of edge pairs based at least on a pair-wise matching between the set of first-side edge portions and the set of second-side edge portions; and
   arranging the plurality of images in a first sequence based at least on the first set of weights assigned to the first plurality of edge pairs.

2. The method as claimed in claim 1, further comprising determining vector projections associated with the set of the first-side edge portions and the set of the second-side edge portions, the vector projections are configured to facilitate determination of the pair-wise matching between the set of first-side edge portions and the set of second-side edge portions.

3. The method as claimed in claims 1 or 2, further comprising matching the vector projections associated with the set of the first-side edge portions and the set of the second-side edge portions based on a normalized cross correlation of the first plurality of edge pairs.

4. The method as claimed in claim 1, wherein assigning the first set of weights to the first plurality edge pairs comprises, for each edge pair:

> determining histograms associated with a first-side edge portion and a second-side edge portion associated with the each edge pair; and
> computing a distance between the histograms associated with the first edge portion and the second edge portion, wherein the distance is indicative of a weight associated with the each edge pair.

5. The method as claimed in claim 1, wherein determining the first plurality of edge pairs comprises determining a bipartite graph between the set of first-side edge portions and the set of second-side edge portions, the bipartite graph is configured to represent the set of first-side edge portions and the set of second-side edge portions as nodes, and the first plurality of edge pairs between the set of first-side edge portions and the set of second-side edge portions as edges.

6. The method as claimed in claim 1, further comprising generating a matrix of the first set of weights, wherein dimensions of the matrix are associated with a number of first-side edge portions and a number of second-side edge portions of the plurality of images.

7. The method as claimed in claim 1, further comprising generating a panorama image based on the first sequence of the plurality of images.

8. The method as claimed in claim 7, wherein the panorama image is a non-360 degree panorama image.

9. The method as claimed in claim 8, wherein determining the set of first-side edge portions and the set of second-side edge portions comprises:

> determining a dummy first-side edge portion and a dummy second-side edge portion, the dummy first-side edge portion and the dummy second-side edge portion being associated with a first-side portion of a first peripheral image and the dummy second side-edge portion being associated with a second-side portion of a second peripheral image of the plurality of images.

10. The method as claimed in claim 1, further comprising:

> comparing the first set of weights assigned to the first plurality of edge pairs with a predetermined threshold weight; and
> splitting the sequence of images into a plurality of sub-sequences when a plurality of weights of the first set of weights are determined to be greater or equal to the predetermined threshold weight.

11. The method as claimed in claim 10, further comprising:

> determining a set of third-side edge portions and a set of fourth-side edge portions associated with the plurality of sub-sequences, the set of the third-side edge portions being opposite to the set of the fourth-side edge portions;
> determining a second plurality of edge pairs between the set of third-side edge portions and the set of fourth-side edge portions, an edge pair of the second plurality of edge pairs comprising a third-side edge portion of a sub-sequence of images and a fourth-side edge portion of an another sub-sequence of images;
> assigning a second set of weights to the second plurality of edge pairs based at least on a pair-wise matching between the set of third-side edge portions and the set of fourth-side edge portions; and
> arranging the plurality of images in a second sequence based on the second set of weights assigned to the second plurality of edge pairs.

12. The method as claimed in claims 8 to 11 wherein the first sequence and the second sequence of the plurality of images facilitates in generating a panorama image.

13. The method as claimed in claims 1 to 12, wherein the set of the first-side edge portions is opposite to the set of the second-side edge portions.

14. An apparatus comprising means configured to perform the method as claimed in any of claims 1 - 13.

15. A computer program comprising program instructions which when executed by an apparatus causes the apparatus to perform method as claimed in any of claims 1 - 13.

FIGURE 1

202 — Processor

204 — Memory

210

User Interface — 206

Image sensor — 208

200

**FIGURE 2**

FIGURE 3

**FIGURE 4A**

**FIGURE 4B**

508  506  504  510  502

**FIGURE 5A**

502  504  506  508  510

**FIGURE 5B**

FIGURE 6A

FIGURE 6B

Determine a set of first-side edge portions and a set of second-side edge portions associated with a plurality of images 〜702

Determine a first plurality of edge pairs between the set of first-side edge portions and the set of second-side edge portions, wherein an edge pair of the first plurality of edge pairs comprises a first-side edge portion and a second-side edge portion 〜704

Assign a first set of weights to the first plurality of edge pairs based at least on a pair-wise matching between the set of first-side edge portions and the set of second-side edge portions 〜706

Arrange the plurality of images in a first sequence based on the first set of weights assigned to the first plurality of edge pairs 〜708

700

**FIGURE 7**

Start ⟵ 802

800

Facilitate receiving of a plurality of images ⟵ 804

Determine a set of first-side edge portions and a set of second-side edge portions associated with a plurality of images ⟵ 806

Determine vector projections of the set of first-side edge portions and the set of second-side edge portions ⟵ 808

Perform a pair-wise matching of the vector projections of each of the set of first-side edge portions with each of the set of second-side edge portions to determine a pair-wise overlap between each edge pair of a first plurality of edge pairs ⟵ 810

Assign a first set of weights to the first plurality of edge pairs based at least on the pair-wise matching between the set of first-side edge portions and the set of second-side edge portions ⟵ 812

Arrange the plurality of images in a first sequence based at least on the first set of weights assigned to the first plurality of edge pairs ⟵ 814

A

# FIGURE 8A

A

816

No

Are a plurality of
weights of the first set of weights
greater than or equal to a predetermined
threshold weight?

818

Stop

Yes

Split the first sequence into a plurality of sub-sequences based on the edge
pairs having weights greater than the predetermined threshold weight

820

Determine a set of third-side edge portions and a set of fourth-side edge
portions associated with the plurality of sub-sequences, the set of the third-
side edge portions being opposite to the set of the fourth-side edge portions

822

Determine a second plurality of edge pairs between the set of third-side
edge portions and the set of fourth-side edge portions, wherein an edge pair
of the second plurality of edge pairs comprises a third-side edge portion and
a fourth-side edge portion

824

Assign a second set of weights to the second plurality of edge pairs based
on a pair-wise matching between the set of third-side edge portions and the
set of fourth-side edge portions

826

Arrange the plurality of images in a second sequence based on the weights
assigned to the second plurality of edge pairs

828

800

**FIGURE 8B**

Europäisches
Patentamt

European
Patent Office

Office européen
des brevets

# EUROPEAN SEARCH REPORT

Application Number

EP 13 17 3908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIBIRYAKOV A ET AL: "Graph-based multiple panorama extraction from unordered image sets", PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, vol. 6498, 2007, pages 649809-1, XP040236519, ISSN: 0277-786X | 1-4,6-15 | INV. G06T3/40 G06T7/00 |
| Y | * abstract * * page 2, paragraph 2.1 - page 6, paragraph 2.6 * | 5 | |
| X | LIHI ZELNIK-MANOR ET AL: "Automating joiners", PROCEEDINGS OF THE 5TH INTERNATIONAL SYMPOSIUM ON NON-PHOTOREALISTIC ANIMATION AND RENDERING, NPAR '07, 1 January 2007 (2007-01-01), page 121, XP055080809, New York, New York, USA DOI: 10.1145/1274871.1274890 ISBN: 978-1-59-593624-0 | 1,6-15 | |
| Y | * abstract * * page 122, paragraph 2 - page 126, paragraph 5 * | 2-5 | TECHNICAL FIELDS SEARCHED (IPC) G06T |

-/--

The present search report has been drawn up for all claims

| Place of search | Date of completion of the search | Examiner |
|---|---|---|
| Munich | 30 September 2013 | Zamuner, Umberto |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 13 17 3908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BROWN ET AL: "Recognising panoramas", PROCEEDINGS OF THE EIGHT IEEE INTERNATIONAL CONFERENCE ON COMPUTER VISION. (ICCV). NICE, FRANCE, OCT. 13 - 16, 2003; [INTERNATIONAL CONFERENCE ON COMPUTER VISION], LOS ALAMITOS, CA : IEEE COMP. SOC, US, 13 October 2003 (2003-10-13), pages 1218-1225, XP031213183, ISBN: 978-0-7695-1950-0 * abstract * * page 1219, paragraph 2 - page 1222, paragraph 6 * | 1,10-15 | |
| Y | US 2012/019614 A1 (MURRAY LARRY [IE] ET AL) 26 January 2012 (2012-01-26) * abstract * * paragraphs [0015] - [0046], [0051] - [0052], [0057], [0073] - [0074], [0108] - [0142], [0226] - [0227] * | 1,2, 10-15 | |
| Y | WO 2012/039719 A1 (HEWLETT PACKARD DEVELOPMENT CO [US]; BANNER RON [IL]; BARKOL OMER [IL]) 29 March 2012 (2012-03-29) * paragraphs [0001], [0013], [0024] - [0030] * | 1,2,4,5, 10-15 | TECHNICAL FIELDS SEARCHED (IPC) |
| Y | US 2005/094898 A1 (XU CHENYANG [US] ET AL) 5 May 2005 (2005-05-05) * paragraphs [0002], [0012] - [0018], [0031] - [0035] * | 1-5, 10-15 | |

The present search report has been drawn up for all claims

| Place of search | Date of completion of the search | Examiner |
|---|---|---|
| Munich | 30 September 2013 | Zamuner, Umberto |

EPO FORM 1503 03.82 (P04C01)

**ANNEX TO THE EUROPEAN SEARCH REPORT
ON EUROPEAN PATENT APPLICATION NO.**

EP 13 17 3908

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2013

| Patent document cited in search report | | Publication date | Patent family member(s) | Publication date |
|---|---|---|---|---|
| US 2012019614 | A1 | 26-01-2012 | NONE | |
| WO 2012039719 | A1 | 29-03-2012 | NONE | |
| US 2005094898 | A1 | 05-05-2005 | DE 102004046237 A1<br>US 2005094898 A1 | 14-07-2005<br>05-05-2005 |

EPO FORM P0459

For more details about this annex : see Official Journal of the European Patent Office, No. 12/82